# FASCICULE DE BREVET EUROPEEN

(11) **EP 1 901 099 B1**
(45) Date de publication et mention de la délivrance du brevet: **20.05.2015**
(21) Numéro de dépôt: 07115744.0
(22) Date de dépôt: 05.09.2007
(51) Int. Cl.: H04Q 11/00, G02B 6/293, G02B 6/35

(54) **Module de commutation de longueurs d'ondes optiques**
Schaltmodul für optische Wellenlängen
Module for switching optical wavelengths

(30) Priorité: 12.09.2006 FR 0653675
(43) Date de publication de la demande: 19.03.2008
(73) Titulaire: ALCATEL LUCENT, 92100 Boulogne-Billancourt (FR)
(72) Inventeur: Peloso, Pierre, 91460, MARCOUSSIS (FR); Prunaire, Magali, 91620, NOZAY (FR); Faure, Jean-Paul, 75014, PARIS (FR)
(74) Mandataire: Sciaux, Edmond

(56) Documents cités:
- EP-A- 1 674 906
- EP-A1- 1 357 408
- WO-A-2005/047942
- US-A- 5 206 497

## Description

L'invention se rapporte à un module de commutation de longueurs d'ondes optiques, du type pouvant être par exemple utilisé dans un noeud de commutation optique transparent ou photonique, c'est-à-dire dans lequel des signaux sont transférés en restant dans le domaine optique sans conversion électronique. L'invention se rapporte notamment au domaine des commutateurs à sélection de longueurs d'ondes (WSS pour Wavelength Selective Switch) et à leurs applications dans les réseaux à multiplexage en longueurs d'ondes (WDM).

Les équipements connus sous le nom de commutateur à sélection de longueurs d'ondes présentent un intérêt considérable dans le domaine des télécommunications optiques. En effet, ces équipements permettent de réaliser des noeuds de commutation de degré quelconque ayant une grande flexibilité de configuration, par exemple des brasseurs optiques transparents (ou OXC) ou des multiplexeurs optiques reconfigurables à insertion/extraction (ou ROADM), avec une structure nettement plus simple qu'en utilisant des composants discrets, un encombrement moindre et une fiabilité élevée. Des commutateurs à sélection de longueurs d'ondes et leurs applications sont décrits, entre autres, dans US-A-2002/196520, WO-A-2004/015469 et S. MECHELS et al., IEEE Communication Magazine, Mars 2003, pp 88-94.

EP-A-1674906 décrit un commutateur à sélection de longueurs d'ondes utilisant des miroirs MEMS. Au cours d'une commutation entre un port de sortie initial et un port de sortie final, l'unité de commande déplace le faisceau de manière à contourner systématiquement les ports de sortie ne correspondant pas à sa destination, de manière à ne pas dépasser une limite de diaphotie admissible.

US-A-5206497 décrit un dispositif de commutation opto-électronique comportant une unité de commande de trajectoire pour commander un moyen d'ajustement de trajectoire de faisceau qui dirige un faisceau laser porteur d'information vers un photorécepteur au choix pour effectuer une connexion. Pour éviter des transmissions non souhaitées, le contrôleur de trajectoire est programmé pour diriger le faisceau de manière à contourner systématiquement les photorécepteurs ne correspondant pas à sa destination. EP-A-1357408 décrit une matrice de commutation optique qui présente la même caractéristique.

Dans les réseaux optiques transparents, une caractéristique critique est la capacité du réseau à se reconfigurer en cas de défaillance ou de perturbation d'un élément de réseau, par exemple noeud ou lien, afin d'éviter ou de limiter une discontinuité du service. Cette caractéristique est recherchée au moyen de différents matériels et procédés désignés généralement sous les noms de protection ou de restauration.

Un but de l'invention est d'améliorer la vitesse de reconfiguration d'une matrice de commutation optique. Un autre but de l'invention est de fournir un équipement de commutation optique capable de commuter des signaux en fonction de leurs caractéristiques spectrales et capable de se reconfigurer rapidement dans un nouvel état de commutation. Un autre but de l'invention est de fournir un module de commutation de longueurs d'ondes optiques qui permette d'améliorer la protection d'un noeud de commutation transparent, notamment contre la défaillance d'une matrice de commutation optique.

Pour cela, l'invention fournit un module de commutation de longueurs d'ondes optiques comportant
une pluralité de ports optiques,
des éléments optiques disposés de manière à former une pluralité de chemins optiques respectifs entre lesdits ports optiques pour une pluralité de canaux de longueur d'onde respectifs, lesdits éléments optiques incluant un organe de manipulation spatiale de la lumière configurable dans des états incluant une pluralité d'états de couplage, dans chacun desquels ledit organe de manipulation spatiale est apte à coupler une section de chemin optique venant d'un port d'entrée avec une section de chemin optique allant à un port de sortie,
caractérisé par le fait qu'il comporte une unité de commande apte à commander l'organe de manipulation spatiale sélectivement dans un mode de reconfiguration protégé contre les fautes et dans un mode de reconfiguration rapide, l'organe de manipulation spatiale commandé dans le mode de reconfiguration rapide étant apte à se reconfigurer vers un état de couplage final de manière à atteindre plus rapidement l'état de couplage final que dans le mode de reconfiguration protégé contre les fautes.

Un état de couplage de l'organe de manipulation spatiale désigne ici l'existence d'un chemin optique de propagation passant par l'organe de manipulation spatiale entre au moins un port optique d'entrée et au moins un port optique de sortie pour au moins un canal de longueur d'onde, par exemple par réflexion ou par réfraction d'un faisceau optique dans l'organe de manipulation spatiale. Un organe de manipulation spatiale optique peut être réalisé de nombreuses manières, par exemple sous la forme d'un réflecteur optique, d'un prisme, d'une lentille, d'un guide d'onde, d'un réseau de diffraction, d'un modulateur spatial de phase et/ou d'amplitude et plus généralement de tout composant connu dans le domaine de l'optique pour diriger un rayonnement optique. Selon les modes de réalisation, un organe de manipulation spatiale peut comporter des parties mobiles ou non. Selon l'agencement des éléments optiques, un organe de manipulation spatiale peut être agencé de manière à être attribué à un canal de longueur d'onde donné ou bien de manière à participer à des chemins optiques pour plusieurs canaux de longueurs d'ondes. Selon l'agencement des éléments optiques, les chemins optiques passant par un organe de manipulation spatiale peuvent provenir d'un seul ou de plusieurs ports et peuvent aller vers un seul ou plusieurs ports.

Selon un mode de réalisation particulier, l'organe de manipulation spatiale de la lumière comporte un organe de déflection mobile et un actionneur apte à déplacer l'organe de déflection dans des positions incluant une pluralité de positions de couplage. Dans ce cas, une reconfiguration de l'organe de manipulation spatiale peut impliquer de déplacer l'organe de déflection selon une trajectoire entre une position initiale et une position finale. Par exemple, l'organe de déflection comprend un réflecteur optique. Un organe de déflection peut être intégralement mobile ou partiellement mobile, i.e. déformable. Un actionneur et un organe de déflexion peuvent être réalisés de manière intégrée ou comporter un ou plusieurs éléments communs. Le ou les actionneurs peuvent être réalisés avec diverses technologies. Avantageusement, l'actionneur comprend un système microélectromécanique (MEMS).

Selon un autre mode de réalisation particulier, l'organe de manipulation spatiale de la lumière comporte un modulateur spatial à cristaux liquides. Un tel modulateur peut par exemple être utilisé comme un réseau de diffraction à géométrie réglable.

De préférence, l'organe de manipulation spatiale de la lumière comporte une pluralité d'éléments configurables, disposés par exemple sous la forme d'une rangée ou d'une matrice, et associés à des canaux de longueurs d'ondes respectifs. Des exemples de tels élements sont par exemple des cellules à cristaux liquides, des amplificateurs optiques à semiconducteurs, ou des MEMS.

Un mode de reconfiguration protégé contre les fautes désigne ici un mode de reconfiguration dans lequel l'organe de manipulation spatiale est reconfiguré d'une manière qui préserve, au cours de la reconfiguration, la qualité ou l'intégrité d'au moins une partie des signaux optiques traités (e.g. démultiplexés, routés, multiplexés, extraits, ajoutés) par le module de commutation de longueurs d'ondes. Une tel mode peut être caractérisé par le respect d'une ou plusieurs conditions particulières relevant par exemple des caractéristiques physiques des éléments optiques, de la régulation des signaux de commande, de la dynamique des parties en mouvement et/ou des circuits électroniques, de la géométrie des chemins optiques et autres. Ce type de condition à respecter peut influer sur le temps de reconfiguration de l'organe de manipulation spatiale vers un état donné.

Les inventeurs ont constaté que l'applicabilité d'un module de commutation de longueurs d'ondes pouvait être accrue en prévoyant à la fois un ou plusieurs modes de reconfiguration protégés contre les fautes et un ou plusieurs modes de reconfiguration plus rapides permettant d'atteindre plus rapidement la configuration finale. En effet, un module de commutation pourvu de ces deux modes de reconfiguration (au moins) peut être sélectivement commandé d'une manière qui privilégie la qualité des signaux optiques, s'il en existe, ou d'une manière qui privilégie la rapidité de reconfiguration, selon les besoins existant dans une situation donnée.

Selon un mode de réalisation particulier, dans le mode de reconfiguration protégé contre les fautes, l'organe de manipulation spatiale est apte à se reconfigurer vers l'état de couplage final selon une transition indirecte évitant un autre état de couplage et, dans le mode de reconfiguration rapide, l'organe de manipulation spatiale est apte à se reconfigurer vers l'état de couplage final selon une transition plus directe que dans le mode de reconfiguration protégé contre les fautes.

Un tel mode de reconfiguration protégé contre les fautes peut servir à offrir une reconfiguration sans collision (« hitless »), dans laquelle la reconfiguration de l'organe de manipulation spatiale vers un état de couplage associé à un port particulier n'affecte pas un autre port. Une manière particulière de créer un mode de reconfiguration rapide peut être d'annuler ou de passer outre une fonction d'évitement des collisions. De préférence, dans le mode de reconfiguration rapide, l'organe de manipulation spatiale est reconfiguré selon une transition sensiblement directe entre l'état initial et l'état de couplage final.

Lorsqu'il comprend un organe mobile et/ou déformable, l'organe de manipulation spatiale est susceptible d'être affecté par des phénomènes dynamiques transitoires lors d'un changement de position, par exemple des mouvements vibratoires ou des chocs. De tels phénomènes dynamiques transitoires sont susceptibles de se propager jusqu'à d'autres éléments optiques et d'affecter ainsi la qualité ou la stabilité de signaux optiques passant par l'organe de manipulation spatiale ou par ces autres éléments optiques. Il peut donc être souhaitable, dans certains cas, de réduire ou sensiblement supprimer ces phénomènes transitoires par une régulation correspondante d'un signal de pilotage de l'actionneur. La manière dont cette régulation doit être effectuée dépend des principes physiques exploités par l'actionneur de l'organe mobile. Ainsi, un actionneur électrostatique est piloté différemment d'un actionneur à induction ou d'un actionneur piézoélectrique, pour ne citer que quelques exemples. De manière générale, la réduction des phénomènes transitoires peut être obtenue en limitant l'accélération et/ou la vitesse de déplacement de l'organe mobile. Cette régulation peut donc consister à maintenir une caractéristique bien choisie du signal électrique de pilotage en dessous d'un seuil maximal prédéterminé, par exemple le taux de variation de la tension de pilotage dans le cas d'un actionneur électrostatique. Une conséquence de ce type de condition de stabilité est d'allonger la temps de reconfiguration entre la position initiale et la position finale. Dans un mode de réalisation, on propose un mode de reconfiguration rapide qui modifie ou supprime cette régulation, de manière à atteindre plus rapidement la position finale, quitte à produire des phénomènes dynamiques transitoires plus importants que dans le mode de reconfiguration protégé contre les fautes.

Même en l'absence de parties mobiles ou déformables, des phénomènes transitoires de type électrique sont également susceptibles d'apparaître dans les circuits de pilotage d'un organe de manipulation spatiale lors de sa reconfiguration. Pour cela aussi, il peut être souhaitable d'effectuer une régulation correspondante d'un signal de pilotage de l'actionneur, du moins dans un mode de reconfiguration protégé contre les fautes.

Selon un autre mode de réalisation particulier, dans le mode de reconfiguration protégé contre les fautes, un signal électrique de pilotage de l'organe de manipulation spatiale est produit de manière à satisfaire une condition de stabilité prédéterminée et, dans le mode de reconfiguration rapide, ledit signal électrique de pilotage de l'organe de manipulation spatiale est produit sans satisfaire ladite condition de stabilité. Avantageusement, la condition de stabilité consiste à maintenir une caractéristique du signal électrique de pilotage en dessous d'un seuil maximal prédéterminé.

De préférence, l'unité de commande est apte à sélectionner le mode de reconfiguration protégé contre les fautes pour commander une modification de l'état de commutation du module de commutation en réponse à un ordre de reconfiguration selon un premier type et à sélectionner le mode de reconfiguration rapide pour commander une modification de l'état de commutation du module de commutation en réponse à un ordre de reconfiguration selon un deuxième type. Par exemple, le type d'ordre peut être représenté par un champ particulier d'un paquet, d'une trame ou d'un message d'instructions, par un message séparé, ou par un ou plusieurs indicateurs ou variables logiques que l'unité de commande est apte à traiter.

Par exemple, le premier type d'ordre de reconfiguration correspond à un ordre qui est utilisé lorsqu'il existe un signal optique traversant le module de commutation et dont une qualité doit être sauvegardée au cours de la reconfiguration du module de commutation. Cela peut être le cas par exemple lorsqu'il s'agit de supprimer ou d'ajouter ou de modifier un chemin optique de connexion dans un système WDM sans affecter d'autres connexions déjà établies. Inversement, le deuxième type d'ordre de reconfiguration peut être utilisé dans une situation de mise en service du module de commutation, i.e. lorsque aucun signal optique ne préexiste dans le module de commutation, ou dans un situation de réaffectation du module de commutation, i.e. lorsque le module de commutation doit libérer des ressources utilisées par un signal préexistant ayant un niveau de priorité faible et au profit d'un signal ayant un niveau de priorité plus élevé ou dans d'autres situations. De telles situations se rencontrent, entre autres, dans le cas où un équipement de protection doit être activé pour suppléer à un équipement devenu défaillant.

Par module de commutation de longueurs d'ondes, on entend un équipement comportant une pluralité de ports optiques et des éléments optiques disposés de manière à former une pluralité de chemins optiques respectifs entre lesdits ports optiques pour une pluralité de canaux de longueurs d'ondes respectifs. Les différents chemins optiques peuvent être obtenus au moyen d'éléments optiques tels que des lentilles, des éléments dispersifs, par exemple réseaux de diffraction ou prismes, des réflecteurs, des polariseurs, des filtres ou autres. Un tel équipement est capable de commuter des signaux optiques avec une granularité pouvant être un canal de longueur d'onde individuel ou un groupe de canaux ou une bande spectrale ou autre. Dans un tel équipement, le ou les organes de manipulation spatiale peuvent remplir différentes fonctions, par exemple sélectionner un canal de longueur d'onde ou groupe de canaux devant être envoyé vers un port donné parmi plusieurs canaux de longueurs d'ondes provenant d'un port donné, ou sélectionner un port vers lequel doit être envoyé un canal de longueur d'onde donné ou groupe de canaux parmi plusieurs ports accessibles ou autres. Dans certains modes de réalisation, le module de commutation comporte des éléments dispersifs agencés de manière à démultiplexer un multiplex de canaux, afin de pouvoir commuter des signaux optiques en fonction de leurs longueurs d'ondes. Ainsi, un module de commutation de longueurs d'ondes désigne par exemple un équipement pouvant remplir une ou plusieurs des fonctions suivantes : démultiplexeur reconfigurable, démultiplexeur reconfigurable à extraction, multiplexeur reconfigurable, multiplexeur reconfigurable à insertion, routeur de longueurs d'ondes reconfigurable, bloqueur de longueurs d'ondes reconfigurable et autres. Selon un mode de réalisation préféré, le module de commutation est agencé sous la forme d'un commutateur à sélection de longueurs d'onde.

Le module de commutation de longueurs d'ondes peut être avantageusement utilisé comme module de protection avec un schéma de protection matériel de type 1 pour 1 (1 +1) ou de type 1 pour N (1:N), N désignant un entier positif ≥2, avec ou sans trafic additionnel dans le module de protection.

L'invention fournit également un module de commutation de longueurs d'ondes optiques agencé en tant que module de protection dans un dispositif de commutation optique, par exemple un noeud de commutation transparent pour un réseau WDM, le dispositif de commutation optique comprenant
un module de commutation de longueurs d'ondes disposé en tant que module à protéger, ledit module à protéger étant apte à recevoir au moins un signal d'entrée et à transmettre au moins un signal de sortie incluant un ou plusieurs canaux de longueurs d'ondes sélectionnés parmi les composants dudit au moins un signal d'entrée, et
une liaison optique apte à fournir ledit signal d'entrée audit module de protection, ladite unité de commande du module de protection étant apte à commander l' organe de manipulation spatiale dans le mode de reconfiguration rapide, par exemple en réponse à la réception d'un ordre de déclenchement de protection, de manière à configurer ledit module de protection dans un état de commutation apte à produire, au niveau d'un port dudit module de protection, un signal optique correspondant audit signal de sortie du module à protéger.

De préférence, le module de commutation est agencé en tant que module de protection partagé dans un dispositif de commutation optique comprenant une pluralité de modules à protéger et une pluralité de liaisons optiques aptes à fournir des signaux d'entrée respectivement attribués à chacun desdits modules à protéger audit module de protection partagé,
l'unité de commande du module de protection partagé étant apte, par exemple en réponse à des ordres de déclenchement de protection respectifs, à sélectionner le mode de reconfiguration rapide pour configurer ledit module de protection partagé dans des états de commutation respectifs aptes à produire, au niveau d'un port dudit module de protection, des signaux optiques correspondant à des signaux de sortie des modules à protéger.

Avantageusement, un port de sortie du module de protection partagé est relié à un commutateur spatial apte à diriger sélectivement un signal de sortie dudit module de protection partagé vers une pluralité de sorties dudit commutateur spatial. De préférence une unité de commande est apte à commander ledit commutateur spatial en réponse à une situation de déclenchement de protection. Ainsi, dans le cas d'une protection partagée, le commutateur spatial peut être utilisé pour diriger le signal de sortie du module de protection vers une destination, par exemple un port de sortie, sélectionnée en fonction du module à protéger. Ceci permet aussi d'utiliser une même sortie du module de protection indépendamment du module à protéger pour lequel la protection est activée.

Alternativement ou en combinaison, un port d'entrée du module de protection partagé peut être relié à un commutateur spatial apte à diriger sélectivement des signaux optiques depuis une pluralité d'entrées dudit commutateur spatial vers un port d'entrée dudit module de protection partagé. Ainsi, dans le cas d'une protection partagée, le commutateur spatial peut être utilisé pour diriger vers le port d'entrée du module de protection un signal d'entrée sélectionné en fonction du module à protéger. Ceci permet aussi d'utiliser une même entrée du module de protection indépendamment du module à protéger pour lequel la protection est activée.

De préférence, l'unité de commande est reliée directement ou indirectement à un module de détection de fautes apte à détecter une faute de fonctionnement d'un module à protéger et à produire un signal d'alerte en réponse à ladite détection.

L'invention fournit également un procédé de commande d'un organe de manipulation spatiale de la lumière pour un module de commutation de longueurs d'ondes optiques disposé en tant que module de protection d'au moins un module de commutation de longueurs d'ondes optiques disposé en tant que module à protéger, comprenant les étapes consistant à :
détecter un ordre de déclenchement de protection et commander ledit organe de manipulation spatiale en réponse audit ordre de déclenchement de protection dans un mode de reconfiguration rapide, pour placer ledit module de protection dans un état de commutation apte à produire, au niveau d'un port dudit module de protection, un signal optique correspondant à un signal de sortie dudit module à protéger, et
détecter un ordre de reconfiguration et commander ledit organe de manipulation spatiale en réponse audit ordre de reconfiguration dans un mode de reconfiguration protégé contre les fautes, pour placer ledit module de protection dans un état de commutation correspondant audit ordre de reconfiguration.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 est une vue en coupe des éléments optiques d'un commutateur à sélection de longueurs d'ondes de l'art antérieur,
La figure 2 est une représentation fonctionnelle d'un commutateur à sélection de longueurs d'ondes selon un mode de réalisation de l'invention,
Les figures 3 et 4 représentent une reconfiguration du commutateur de la figure 2 respectivement avec et sans une fonction d'évitement des collisions,
La figure 5 est un graphique montrant des signaux de pilotage d'un actionneur du commutateur de la figure 2,
La figure 6 est une représentation fonctionnelle d'un brasseur optique 2x2 réalisé avec un commutateur selon un mode de réalisation de l'invention,
La figure 7 est une représentation fonctionnelle d'un contrôleur électronique du commutateur de la figure 2.

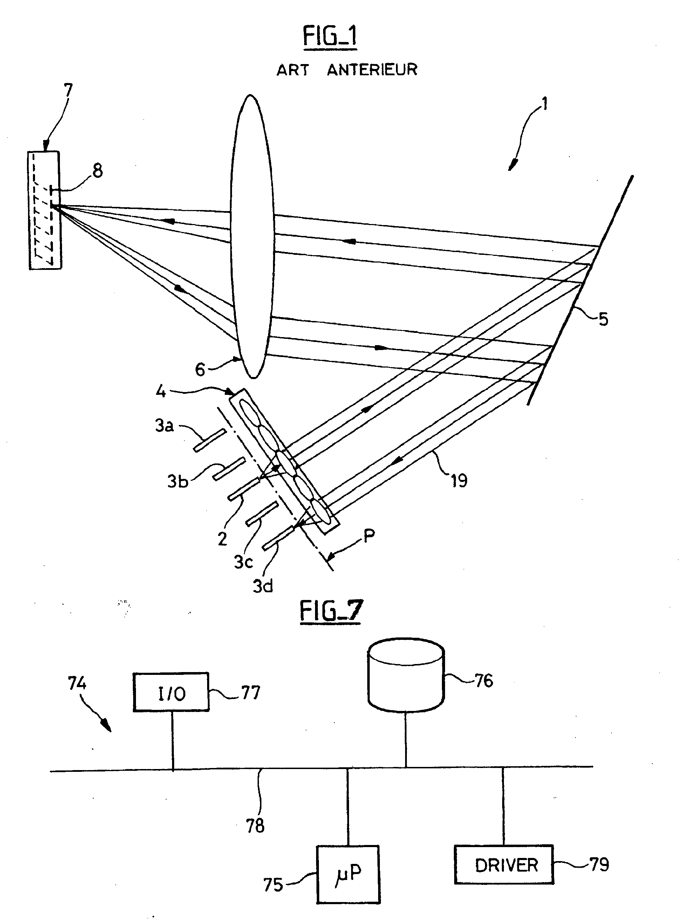

Sur la figure 1, on a représenté une matrice de commutation optique 1 pour un commutateur à sélection de longueur d'onde décrit dans US-A-2002/196520. Elle comprend essentiellement une pluralité de ports incluant un port commun 2 et quatre ports sélectionnables 3a à 3d, un réseau de microlentilles 4 associé aux ports, un réseau de diffraction 5 pour démultiplexer les canaux de longueurs d'ondes de manière spatiale, une lentille convergente 6 et un tableau de micromiroirs dans lequel chaque micromiroir 8 est attribué à une longueur d'onde particulière et est actionnable individuellement au moyen de microactionneurs 7. Les microactionneurs peuvent être des systèmes microélectromécaniques (MEMS) ou autres. Chaque micromiroir 8 peut être ainsi positionné dans au moins quatre positions d'alignement respectives, qui forment à chaque fois un chemin optique entre le port commun 2 et l'un des ports sélectionnables respectifs 3a à 3d pour le canal de longueur d'onde attribué à ce micromiroir. Sur la figure 1, on a représenté un tel chemin optique entre le port 2 et le port 3d à titre illustratif. Le nombre de canaux de longueur d'onde pouvant être traités, et donc le nombre de micromiroirs 8, peut être bien plus élevé que sur la figure 1, par exemple 96 canaux.

Il est rappelé qu'un tel commutateur à sélection de longueur d'onde peut être utilisé comme multiplexeur programmable ou comme démultiplexeur programmable. Lorsqu'il agit en tant que démultiplexeur, comme montré sur la figure 1, les ports sélectionnables 3a-d servent de sorties et le port commun 2 sert d'entrée commune. Le commutateur à sélection de longueurs d'onde est capable d'aiguiller chaque canal spectral reçu sur son entrée commune, de façon sélective en fonction de signaux de pilotage transmis aux microactionneurs 7, vers l'une de ses sorties. Cet équipement réalise ainsi une fonction de démultiplexage programmable sur des canaux de longueurs d'ondes dont les fréquences optiques sont alignées sur une grille prédéterminée. Chaque port de sortie 3a-d peut donc recevoir sélectivement un canal présent à l'entrée commune, plusieurs canaux présent à l'entrée commune ou aucun canal. La fonction de suppression ou de blocage d'un canal peut être intégrée par construction dans un commutateur à sélection de longueurs d'onde. Dans ce cas, le micromiroir associé au canal présente une position d'alignement particulière pour orienter le faisceau vers un endroit spécifique du commutateur à sélection de longueurs d'onde où il est absorbé.

Lorsqu'il agit en tant que multiplexeur, les ports sélectionnables 3a-d servent d'entrées et le port commun 2 sert de sortie commune. Le commutateur à sélection de longueurs d'onde est capable d'aiguiller des canaux de longueurs d'ondes reçus sur des entrées respectives, sélectivement en fonction des longueurs d'onde des canaux reçus et des entrées respectives et en fonction des signaux de pilotage transmis aux microactionneurs 7, vers la sortie commune de cet équipement. L'équipement réalise alors une fonction de multiplexage programmable permettant de fournir en sortie un canal sélectionné parmi les canaux reçus sur les entrées ou un multiplex de sortie constitué d'un ensemble de canaux sélectionnés parmi les canaux reçus. Sur chaque port d'entrée, on peut envoyer un canal, plusieurs canaux ou aucun canal. Dans ce cas également, un canal présent sur un port d'entrée et devant être bloqué est orienté vers un endroit spécifique du commutateur à sélection de longueurs d'ondes où il est absorbé.

Bien d'autres architectures de commutateurs à sélection de longueurs d'ondes sont connues pour remplir des fonctionnalités similaires, avec un nombre de ports plus ou moins grand. La figure 1 ne saurait donc être considérée comme limitative à ce titre.

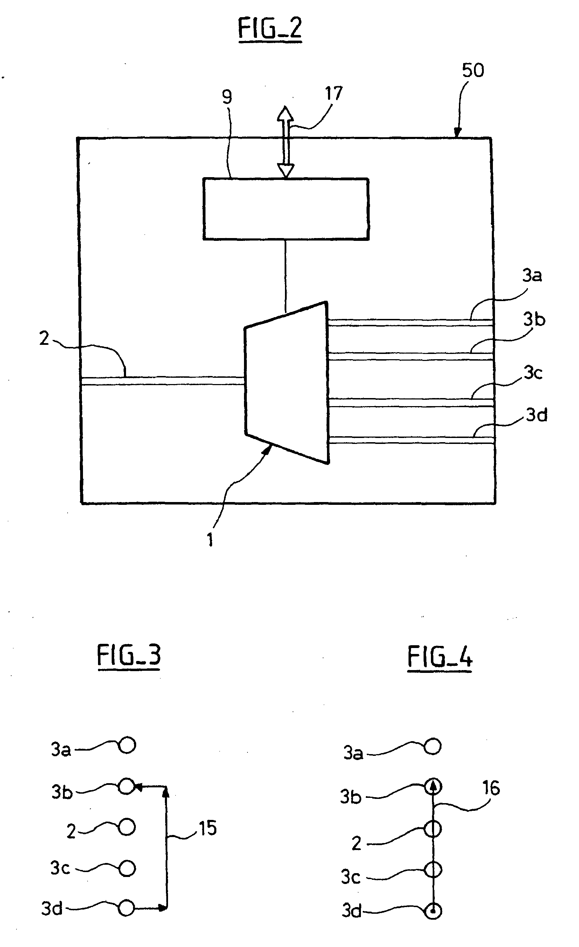

La figure 2 est une représentation fonctionnelle d'un commutateur à sélection de longueurs d'ondes 50. Les mêmes chiffres de référence désignent des éléments analogues ou identiques à ceux de la figure 1. Le bloc 9 désigne une unité de commande reliée à la matrice de commutation 1 pour transmettre des signaux de pilotage aux microactionneurs 7. La matrice de commutation 1 et l'unité de commande 9 peuvent être par exemple packagés sous la forme d'un module unitaire.

Dans un procédé de commande du commutateur à sélection de longueurs d'ondes 50, on peut distinguer deux grandes étapes. Une première étape consiste à définir un état de commutation dans lequel la matrice de commutation 1 doit être placée à un instant donné. Cette étape peut être réalisée par des procédés connus dans le domaine du routage et de la signalisation dans les réseaux WDM et ne sera donc pas décrite ici. Une deuxième étape consiste à traduire cet état de commutation à atteindre en des signaux de pilotage pour les actionneurs de la matrice de commutation. L'unité de commande 9 est conçue pour effectuer au moins cette deuxième étape, à savoir pour piloter les microactionneurs 7 de manière à placer la matrice de commutation 1 dans un état de commutation souhaité. L'état de commutation à atteindre peut être défini par des instructions de commande reçues par l'unité de commande 9 depuis des équipements extérieurs, comme indiqué par la flèche 17, par exemple depuis un contrôleur central de noeud ou un système de gestion de réseau. En variante, l'état de commutation à atteindre peut être déterminé par des processus internes à l'unité de commande 9.

Lorsqu'un état de commutation à atteindre est défini, l'unité de commande 9 est capable de calculer le déplacement devant être effectué par chaque microactionneur de micromiroir, le cas échéant, et de transmettre des signaux électriques de pilotage correspondants aux microactionneurs 7. Ces signaux de pilotage définissent notamment la trajectoire et la dynamique du déplacement d'un micromiroir 8.

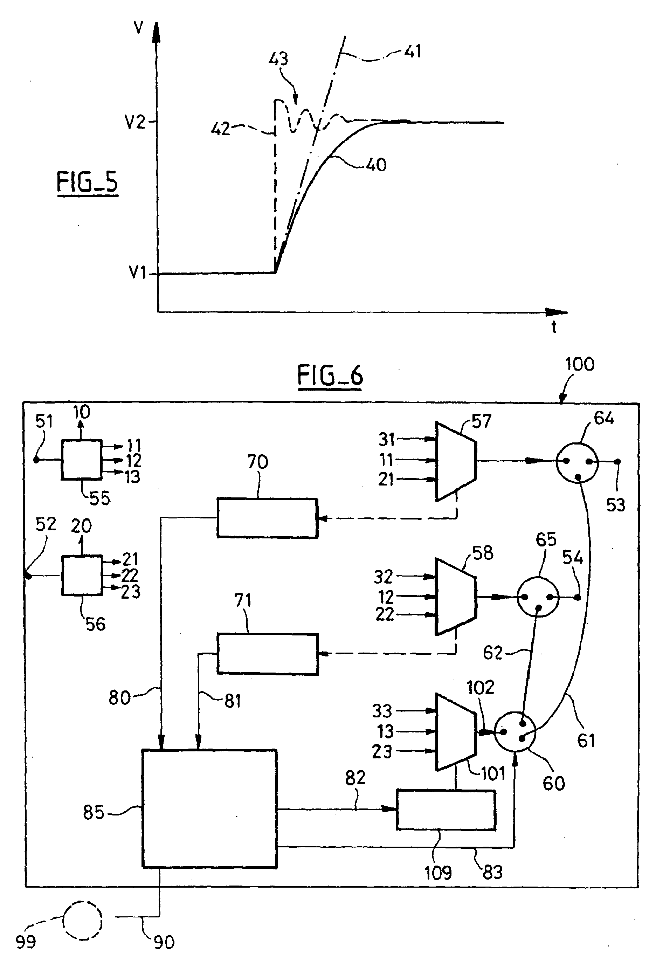

Pour piloter un actionneur vers une nouvelle position de commutation, l'unité de commande 9 est capable de sélectionner plusieurs modes de reconfiguration :
- dans un mode de reconfiguration sans collision, la trajectoire d'un micromiroir 8 est calculée de manière à éviter d'envoyer un canal de longueur d'onde sur un port qu'il n'est pas censé atteindre. Par exemple, en référence à la figure 3, on décrit un cas dans lequel un micromiroir attribué à un canal de longueur d'onde donné présente une position initiale correspondant à une commutation depuis le port 2 vers le port 3d (correspondant au chemin optique illustré sur la figure 1) et doit atteindre une position finale correspondant à une commutation depuis le port 2 vers le port 3b. La figure 3 est une vue frontale des ports dans le plan P indiqué sur la figure 1. Un déplacement du micromiroir produit un déplacement correspondant du faisceau optique 19 dans le plan P. Les flèches 15 représentent une trajectoire possible pour le faisceau optique 19 satisfaisant la condition d'évitement des collisions.
   Le déplacement correspondant du micromiroir implique ici un pivotement selon deux axes orthogonaux. Toutefois, ce n'est pas la seule manière d'obtenir une telle trajectoire. Par exemple, des réflecteurs ou autres organes de déflection peuvent être disposés sur plusieurs étages pour multiplier les degrés de liberté des faisceaux optiques, par exemple selon les agencements décrits dans WO-A-2004/015469.
- dans un mode de reconfiguration direct, la trajectoire d'un micromiroir 8 est calculée de manière à atteindre plus directement la position finale, par exemple selon une ligne directe. Par exemple, en référence à la figure 4 qui est une représentation analogue à la figure 3, la flèche 16 représente une trajectoire du faisceau optique 19 selon une ligne directe pour atteindre la même position de commutation que sur la figure 3. Ici, le déplacement du microactionneur ne satisfait pas la condition d'évitement des collisions puisque, si le faisceau optique 19 est présent pendant la reconfiguration, il passe temporairement sur les ports 3c et 2 qu'il n'était pas censé atteindre. Le déplacement est plus court et plus simple, et peut donc être effectué plus rapidement que dans le mode de reconfiguration sans collision.
- dans un mode de reconfiguration stabilisé, les signaux de pilotage d'un microactionneur sont calculés et produits de manière à limiter les perturbations transitoires susceptibles d'être transmises aux autres éléments de la matrice de commutation optique, notamment les microactionneurs et micromiroirs voisins. Pour cela, la dynamique du déplacement d'un microactionneur est contrainte de manière particulière, par exemple en contenant la vitesse et/ou l'accélération du microactionneur dans des bornes prédéfinies. La figure 5 représente, à titre purement illustratif, le cas d'un signal de pilotage pour un actionneur à force électrostatique de type MEMS. V1 désigne un niveau de tension de pilotage correspondant à la position initiale du microactionneur et V2 désigne un niveau de tension de pilotage correspondant à la position finale du microactionneur. La courbe 40 illustre, de manière purement qualitative, une manière de faire évoluer la tension de pilotage entre V1 et V2 dans un mode de reconfiguration stabilisé. Ici, une condition de stabilité qui est respectée par le signal de pilotage est de présenter un taux de variation inférieur à un seuil maximal prédéterminé représenté par la ligne 41. D'autres types de conditions de stabilité peuvent être définis par l'homme du métier en fonction du type d'actionneur et de sa courbe de réponse dynamique.
- dans un mode de reconfiguration tolérant, les signaux de pilotage d'un microactionneur sont calculés et produits de manière à atteindre plus rapidement la position finale. Pour cela, une condition de stabilité utilisée dans le mode stabilisé est partiellement ou totalement relâchée, de sorte que la dynamique du déplacement puisse atteindre un niveau plus élevé. La courbe 42 illustre, de manière purement qualitative, une manière de faire évoluer la tension de pilotage entre V1 et V2 dans un mode de reconfiguration tolérant. Ici, la condition de stabilité matérialisée par la ligne 41 n'est plus respectée, de sorte que le niveau de signal final est atteint plus rapidement. La portion 43 représente, de manière purement qualitative, des oscillations transitoires susceptibles d'affecter le microactionneur et/ou son environnement en raison de la forte dynamique du mouvement.

Ces modes de reconfiguration sont sélectionnables individuellement ou par paires, de manière à constituer au moins un mode de reconfiguration préservant mieux la qualité des signaux traités et un mode de reconfiguration plus rapide. Par exemple, un mode de reconfiguration protégé contre les fautes inclut les caractéristiques d'un mode choisi parmi un mode de reconfiguration sans collision et un mode de reconfiguration stabilisé ou de ces deux modes pris en combinaison. Par exemple, un mode de reconfiguration rapide inclut les caractéristiques d'un mode choisi parmi un mode de reconfiguration direct et un mode de reconfiguration tolérant ou de ces deux modes pris en combinaison. De plus, l'un ou plusieurs des modes de reconfiguration énoncés ci-dessus pourrait être obligatoire et non pas sélectionnable. Ces modes de reconfiguration peuvent aussi bien être exploités dans une application de multiplexage que dans une application de démultiplexage.

Des essais réalisés avec un commutateur à sélection de longueurs d'ondes à technologie MEMS ont montré une réduction du temps de reconfiguration d'un facteur d'environ 10 entre un mode de reconfiguration sans collision et stabilisé, et un mode de reconfiguration direct et tolérant.

Pour réaliser ces fonctions, l'unité de commande 9 peut être réalisée sous la forme d'un contrôleur électronique programmable 74, visible sur la figure 7, incluant essentiellement un microprocesseur 75, une mémoire 76, des interfaces d'entrée/sortie 77, par exemple du type port série, des circuits de pilotage 79 et un réseau de bus 78 interconnectant ces composants. Les circuits de pilotage 79 comportent l'électronique de puissance pour produire les signaux de pilotage proprement dits. Le microprocesseur 75 et la mémoire 76 comportent les moyens matériels et logiciels pour déterminer, en fonction des instructions définissant un état de commutation à atteindre, une succession de déplacements élémentaires devant être effectués par les actionneurs.

Les instructions définissant un état de commutation à atteindre peuvent par exemple être reçues à travers les interfaces 77 sous la forme d'une série d'informations incluant, pour chaque microactionneur à reconfigurer, un numéro ou identificateur du microactionneur ou du canal de longueur d'onde correspondant, un numéro ou identificateur du port sélectionnable à atteindre et un indicateur logique du mode de reconfiguration à employer. Ces instructions sont avantageusement fournies sous la forme d'une liste ou d'un tableau d'informations rangées par microactionneur ou par canal de longueur d'onde. L'indicateur du mode de reconfiguration peut être fourni collectivement en référence à plusieurs microactionneurs ou individuellement par microactionneur ou par canal correspondant. La forme de cet indicateur dépend du nombre de modes sélectionnables. Des protocoles convenant pour communiquer avec le contrôleur 74 sont par exemple Simple Network Management Protocol ou Command Line Interface ou d'autres, notamment des langages de bas niveau propres aux constructeurs.

D'autres informations peuvent également être fournies à l'unité de commande 9, selon les fonctionnalités mises en oeuvres par le commutateur 50, par exemple des niveaux d'atténuation respectifs à appliquer sur les canaux de longueurs d'ondes. L'atténuation peut être obtenue en réglant précisément la position d'un micromiroir 8 autour d'une position d'alignement donnée ou avec d'autres moyens, par exemple des atténuateurs optiques variables.

Des procédés de commande similaires peuvent être appliqués à d'autres types de matrices optiques dans lesquelles le réglage de l'état de commutation et/ou le réglage de l'atténuation sont obtenus avec d'autres types de composants reconfigurables. Par exemple, WO-A1-2005047942 décrit un commutateur à sélection de longueurs d'ondes dans lequel ces fonctions sont remplies par un modulateur spatial à cristaux liquides. L'architecture est similaire à celle de la figure 1, sauf qu'un écran réflecteur LCD remplace ici les micromiroirs 8. Cet écran est divisé en cellules qui sont respectivement affectées à des longueurs d'ondes séparées par le réseau de diffraction. En réglant les tensions de pilotage des pixels d'une cellule, on configure la cellule comme un réseau de diffraction réglable. La géométrie de ce réseau de diffraction peut être choisie de manière à coupler le faisceau monochromatique incident de manière plus ou moins forte avec l'un ou l'autre des ordre du réseau, de manière à régler la direction et l'intensité du faisceau diffracté. Différents états de configuration d'une cellule sont par exemple représentés sur les figures 5 à 9 du document précité.

Pour piloter un modulateur spatial à cristaux liquides vers un nouvel état de commutation, il est aussi possible d'appliquer des modes de reconfiguration tels que le mode de reconfiguration sans collision, le mode de reconfiguration direct, le mode de reconfiguration stabilisé et le mode de reconfiguration tolérant. Pour faire passer une cellule LCD d'un premier à un deuxième état de configuration, correspondant par exemple aux figures 5 et 6 précités, un mode de reconfiguration sans collision peut être obtenu en réduisant progressivement la tension de pilotage des pixels jusqu'à obtenir un réseau à amplitude nulle, de manière à éteindre progressivement le faisceau diffracté dans le premier état de configuration sans modifier sa direction. En d'autres termes, les pixels sont modifiés simultanément en conservant sensiblement les rapports d'indice entre eux. Le modulateur spatial est orienté de manière que l'état à amplitude nulle corresponde à une réflexion du faisceau incident vers une zone d'absorption ou un port réservé à cet effet. Puis, les signaux de pilotage correspondant au deuxième état sont appliqués à partir de l'état de configuration à amplitude nulle de manière à allumer progressivement un faisceau diffracté dans la direction souhaitée. En d'autres termes, les pixels sont modifiés simultanément et par incréments successifs en appliquant des rapports d'indice calculés pour produire la géométrie de réseau souhaitée.

Dans un mode de reconfiguration direct, on peut effectuer une transition plus directe des signaux de pilotage entre le premier et le deuxième état sans passer par l'état à amplitude nulle, de manière à supprimer la latence correspondant à l'extinction progressive puis l'allumage progressif du faisceau. Par exemple, la tension de pilotage de chaque pixel est alors amenée le plus vite possible vers la valeur correspondant au nouvel état de configuration sans égard aux rapports d'indices entre les pixels générés pendant la phase de transition.

Le commutateur à sélection de longueurs d'ondes 50 peut être exploité dans de nombreuses applications. En particulier, par sélection d'un mode de reconfiguration correspondant, l'utilisateur peut obtenir soit une reconfiguration rapide vers un état de commutation donné, par exemple pour mettre en service le commutateur à sélection de longueurs d'ondes à partir d'un état inactif dans lequel il ne traitait aucun signal optique ou aucun signal significatif, soit une reconfiguration plus soignée, par exemple pour changer la commutation d'un canal au cours du service du commutateur sans perturber les autres canaux présents.

Une application possible de ce type de commutateur est la protection d'une matrice de commutation optique dans un noeud de réseau WDM, par exemple un ROADM ou un brasseur optique. On connaît de nombreuses architectures pour des noeuds dont la matrice de commutation comporte un ou plusieurs modules WSS. En référence à la figure 6, on décrit ci-dessous un exemple d'un brasseur optique 2x2 à insertion et extraction ayant une architecture de type diffusion-sélection.

On décrit brièvement la partie optique du brasseur optique 100. Elle comporte un premier port d'entrée 51 relié à un premier module de diffusion non sélectif 55, par exemple un diviseur de faisceau 1:4. Sa sortie 10 est reliée à une section d'extraction non représentée, pour l'extraction locale de trafic. Ses autres sorties sont numérotées 11, 12 et 13. Un deuxième port d'entrée 52 est relié à un deuxième module de diffusion non sélectif 56, par exemple un diviseur de faisceau 1:4. Sa sortie 20 est reliée à la section d'extraction non représentée. Ses autres sorties sont numérotées 21, 22 et 23. Un premier port de sortie 53 est relié, par l'intermédiaire d'un commutateur 64 de type 2x1, au port commun d'un premier module WSS 57 utilisé comme multiplexeur sélectif. Le module WSS 57 comporte au moins trois ports sélectionnables. Le port 31 est relié à une section d'insertion non représentée, pour l'insertion locale de trafic. Un deuxième port de sortie 54 est relié, par l'intermédiaire d'un commutateur 65 de type 2x1, au port commun d'un deuxième module WSS 58 utilisé comme multiplexeur sélectif. Le module WSS 58 comporte au moins trois ports sélectionnables. Le port 32 est relié à la section d'insertion non représentée. Les chiffres 101 et 109 désignent la matrice de commutation optique et l'unité de commande d'un module WSS semblable au commutateur 50 décrit plus haut, utilisé ici comme composant de protection partagé pour les modules WSS 57 et 58. Les chiffres 11, 12, 13, 21, 22 et 23 désignent des liaisons optiques entre les sorties des modules de diffusion 55 et 56 et les ports sélectionnables des commutateurs 57, 58 et 101. Le port 33 est relié à la section d'insertion non représentée. Le port commun 102 du commutateur 101 est relié à l'entrée d'un commutateur spatial 60 de type 1x2 dont une première sortie 61 est reliée au port de sortie 53 par l'intermédiaire du commutateur 64 et une deuxième sortie 62 est reliée au port de sortie 54 du brasseur optique 100 par l'intermédiaire du commutateur 65. D'autres commutateurs pourraient être prévus au niveau des entrées du commutateur 101.

On décrit maintenant la partie commande du brasseur optique 100. Les unités de commande des modules WSS 57 et 58 ne sont pas représentées. Il peut s'agir de composants classiques ou semblables au commutateur 50. Dans un état de fonctionnement normal du brasseur, le routage des canaux depuis les ports d'entrée 51, 52 et les ports d'insertion vers les ports de sortie 53, 54 est effectué essentiellement par les modules WSS 57 et 58 en fonction d'instructions fournies par le contrôleur de noeud 85. Le contrôleur de noeud 85 est par exemple programmé pour remplir des fonctions de routage et de signalisation selon des méthodes connues. Il présente des liaisons 90 avec des dispositifs extérieurs 99, par exemple un système de gestion du réseau et/ou d'autres contrôleurs de noeuds, par exemple pour transmettre et recevoir des instructions de signalisation relatives aux connexions à établir, modifier ou supprimer. Les commutateurs 64 et 65 relient donc respectivement l'entrée connectée au module WSS 57 ou 58 au port de sortie 53 ou 54. Dans cet état de fonctionnement, le commutateur 101 n'est donc pas utilisé. Pour empêcher de transmettre le signal de sortie du commutateur 101 aux ports 53 et 54, les commutateurs 64 et 65 peuvent suffire. Le commutateur 60 pourrait donc être remplacé par un coupleur optique.

En variante, le commutateur 101 pourrait être utilisé pour traiter du trafic non prioritaire dans l'état de fonctionnement normal. Pour cela, une autre sortie (non représentée) pourrait être prévue sur le commutateur spatial 60 vers un port additionnel.

Chacun des modules WSS 57 et 58 est équipé d'un module de détection de panne 70 et 71 apte à détecter un dysfonctionnement du module WSS correspondant et à transmettre des informations correspondantes au contrôleur de noeud 85, comme indiqué par les flèches 80 et 81. Un module de détection de panne inclut par exemple un dispositif de surveillance des canaux apte à mesurer des caractéristiques des canaux de longueurs d'ondes, par exemple la puissance, en différents points du module WSS, par exemple des ports, et une unité logique apte à détecter un état anormal à partir de ces mesures, par exemple une perte de signal, et à produire un signal d'alerte correspondant.

En réponse à la détection d'une défaillance d'un des modules WSS, par exemple ici le module 57, le contrôleur de noeud 85 active la protection du module défaillant en transmettant des instructions correspondantes à l'unité de commande 109, comme indiqué par la flèche 82. Ces instructions entraînent une reconfiguration du commutateur 101 dans un état de commutation équivalent à l'état de commutation du module 57. Comme indiqué par la flèche 83, le contrôleur de noeud 85 commande aussi le commutateur 60 et le commutateur 64 pour transmettre le signal de sortie du commutateur 101 au port 53. Ainsi, le commutateur 101 est substitué au module défaillant pour rétablir le service au niveau du port 53. Ce rétablissement doit être effectué le plus rapidement possible. Pour cela, l'unité de commande 109 exploite un mode de reconfiguration rapide, par exemple tolérant et/ou direct. La sélection de ce mode de reconfiguration peut être opérée par le contrôleur 85 et ordonnée explicitement à l'unité de commande 109 ou bien opérée directement par l'unité de commande 109 en fonction d'une situation particulière qu'elle détecte.

Le basculement du commutateur 64 permet également de couper le signal de sortie du module WSS défaillant. Ceci pourrait être effectué par d'autres moyens, par exemple un atténuateur optique variable ou une porte optique sur la ligne de sortie du module WSS. Dans ce cas, le commutateur 64 pourrait être remplacé par un coupleur 2×1.

Ultérieurement, il peut être nécessaire de reconfigurer le commutateur 101 en cours de service, par exemple pour établir, modifier ou supprimer des connexions passant par le commutateur 101. Pour cela, l'unité de commande 109 peut exploiter un mode de reconfiguration protégé contre les fautes, par exemple sans collision et/ou stabilisé. Ainsi, la reconfiguration est effectuée sans affecter le trafic déjà établi. Le commutateur 101 reste en service au moins jusqu'à ce que le module défaillant soit rétabli. Le mode de reconfiguration protégé contre les fautes peut aussi être exploité antérieurement à l'activation d'une protection, par exemple dans le cas d'un schéma de protection avec trafic additionnel.

Le commutateur 101 peut bien sûr être utilisé de manière analogue pour protéger plus ou moins de deux modules WSS dans des noeuds de commutation de degré quelconque et d'architecture quelconque. La figure 6 ne saurait être considérée limitative à cet égard. Etant donné le coût des composants, une protection des matrices de commutation optiques selon un schéma de protection de type 1 pour N présente un avantage économique qui croît avec la valeur de N. Par exemple, N pourrait être égal à 4, 5 ou 10.

Pour communiquer l'état de commutation à atteindre, le contrôleur 85 peut transmettre des instructions correspondantes à l'unité de commande 109 au moment d'activer la protection. Pour que la reconfiguration soit encore plus rapide, il peut être intéressant, en variante, de maintenir en permanence dans la mémoire de l'unité de commande 109 un enregistrement de l'état de commutation courant de chacun des modules à protéger. Le contrôleur 85 envoie pour cela des instructions correspondantes de mise à jour, périodiquement ou à chaque fois qu'un module à protéger est reconfiguré. Ainsi, l'unité de commande 109 n'a plus qu'à lire ces informations dans sa mémoire locale lorsque la protection doit être activée. L'unité de commande peut aussi, dans ce cas, précalculer et stocker les caractéristiques des signaux de pilotage qui devront être employés, le cas échéant, au moment d'activer la protection. Ainsi, lorsque le contrôleur 85 détecte ou est informé d'une défaillance, il lui suffit de transmettre à l'unité de commande 109 un ordre de protection désignant le module défaillant. En raison de la plus faible quantité de données à transmettre et/ou des précalculs effectués, la reconfiguration du module de protection peut être encore plus rapide.

Il peut exister un déséquilibre en termes d'atténuation ou autres propriétés optiques entre le chemin optique normal à travers un module à protéger et le chemin optique de protection à travers le module de protection correspondant. De préférence, l'état de commutation à atteindre par le module de protection est calculé de manière à compenser ces déséquilibres. Par exemple, lorsque la protection est activée, l'état de commutation du module de protection correspond à des niveaux d'atténuation des canaux transmis qui sont égaux ou différents des niveaux d'atténuation appliqués par le module à protéger, selon qu'il existe ou non un déséquilibre devant être compensé entre les chemins optiques. Lorsque l'unité de commande 109 effetue un précalcul des signaux de pilotage, il peut être avantageux que ce précalcul prenne en compte la compensation des déséquilibres entre chemins, s'ils sont connus.

Certains des éléments représentés, notamment les unités de commande 9 et 109, le contrôleur de noeud 85 et le système de gestion de réseau 99 peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Un système de gestion de réseau peut être un équipement matériel, par exemple un micro-ordinateur, une station de travail, un appareil connecté à l'Internet ou tout autre dispositif de communication dédié ou à usage général. Des programmes logiciels exécutés par ce système remplissent des fonctions de gestion du réseau pour contrôler des éléments de réseau.

Bien que les modes de réalisation ci-dessus fassent référence à un commutateur à sélection de longueurs d'ondes, l'homme du métier constatera que les mêmes procédés de commande peuvent être appliqués dans d'autres types de modules de commutation de longueurs d'ondes présentant un nombre plus ou moins élevé de ports, un nombre plus ou moins élevé d'états de commutation distincts et des fonctionnalités plus ou moins riches que les commutateurs à sélection de longueurs d'ondes. D'autres exemples de modules de commutation sont les ROADM décrits dans US-B-6204946. Encore d'autres exemples de modules de commutation de longueurs d'ondes sont des matrices de commutation optiques plus simples, aptes à commuter sur un ou plusieurs ports de sortie des canaux de longueurs d'ondes qu'elle reçoivent de manière séparée sur des ports d'entrée, sans intégrer une fonction de démultiplexage des canaux. Les ports d'un module de commutation peuvent donc désigner des ports d'entrée, de sortie, d'insertion, d'extraction ou autres, unidirectionnels ou bidirectionnels, selon les architectures et les fonctionnalités offertes.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs unités ou modules peuvent être représentés par un même élément matériel.

Dans les revendications, tout chiffre de référence entre parenthèses ne saurait être interprété comme une limitation de la revendication.

## Revendications

1. Module de commutation de longueurs d'ondes optiques (50) comportant
une pluralité de ports optiques (2, 3a-d),
des éléments optiques (4, 5, 6, 8) disposés de manière à former une pluralité de chemins optiques respectifs entre lesdits ports optiques pour une pluralité de canaux de longueur d'onde respectifs, lesdits éléments optiques incluant un organe de manipulation spatiale de la lumière configurable dans des états incluant une pluralité d'états de couplage, dans chacun desquels ledit organe de manipulation spatiale est apte à coupler une section de chemin optique venant d'un port d'entrée (2) avec une section de chemin optique allant à un port de sortie (3a-d),
et une unité de commande (9) apte à commander l'organe de manipulation spatiale dans un mode de reconfiguration protégé contre les fautes, dans lequel l'organe de manipulation spatiale est reconfiguré vers un état de couplage final selon une transition indirecte (15) évitant un autre état de couplage,
**caractérisé par le fait que** l'unité de commande (9) est aussi apte à commander l'organe de manipulation spatiale sélectivement dans un mode de reconfiguration rapide, dans lequel l'organe de manipulation spatiale est reconfiguré vers l'état de couplage final selon une transition directe (16) entre l'état initial et l'état de couplage final, en passant temporairement par un autre état de couplage différent de l'état de couplage final, de manière à atteindre plus rapidement l'état de couplage final que dans le mode de reconfiguration protégé contre les fautes,
et que ladite unité de commande sélectionne le mode de reconfiguration protégé contre les fautes pour commander une modification de l'état de commutation du module de commutation vers un état de couplage final en réponse à un ordre de reconfiguration selon un premier type et sélectionne le mode de reconfiguration rapide pour commander une modification de l'état de commutation du module de commutation vers ledit état de couplage final en réponse à un ordre de reconfiguration selon un deuxième type.

2. Module de commutation selon la revendication 1, **caractérisé par le fait que**, dans le mode de reconfiguration protégé contre les fautes, l'unité de commande est apte à produire un signal électrique de pilotage (40) de l'organe de manipulation spatiale de manière à satisfaire une condition de stabilité prédéterminée consistant à maintenir une caractéristique du signal électrique de pilotage en dessous d'un seuil maximal prédéterminé (41) et, dans le mode de reconfiguration rapide, l'unité de commande est apte à produire ledit signal électrique de pilotage (42) de l'organe de manipulation spatiale sans satisfaire ladite condition de stabilité.

3. Module de commutation selon l'une des revendications 1 à 2, **caractérisé par le fait que** l'unité de commande est apte à traiter des instructions comprenant un indicateur logique représentant le mode de reconfiguration à employer.

4. Module de commutation selon l'une des revendications 1 à 3, **caractérisé par le fait que** lesdits éléments optiques comprennent un élément dispersif (5) agencé de manière à pouvoir démultiplexer un multiplex de canaux provenant d'un port.

5. Module de commutation selon la revendication 4, **caractérisé par le fait qu'**il est agencé sous la forme d'un commutateur à sélection de longueurs d'ondes.

6. Module de commutation selon l'une des revendications 1 à 5, **caractérisé par le fait que** l'organe de manipulation spatiale de la lumière comporte un organe de déflection mobile (8) et un actionneur (7) apte à déplacer ledit organe de déflection dans des positions incluant une pluralité de positions de couplage.

7. Module de commutation selon la revendication 6, **caractérisé par le fait que** l'organe de déflection comprend un réflecteur optique.

8. Module de commutation selon la revendication 6 ou 7, **caractérisé par le fait que** l'actionneur comprend un système microélectromécanique.

9. Module de commutation selon l'une des revendications 1 à 5, **caractérisé par le fait que** l'organe de manipulation spatiale de la lumière comporte un modulateur spatial à cristaux liquides.

10. Dispositif de commutation optique (100), **caractérisé par le fait qu'**il comporte un module de commutation selon l'une des revendications 1 à 9 disposé en tant que module de protection (101), le dispositif de commutation optique comprenant
un module de commutation de longueurs d'ondes (57) disposé en tant que module à protéger, ledit module à protéger étant apte à recevoir au moins un signal d'entrée et à transmettre au moins un signal de sortie incluant un ou plusieurs canaux de longueur d'onde sélectionnés parmi les composants dudit au moins un signal d'entrée,
une liaison optique (13, 33) apte à fournir ledit signal d'entrée audit module de protection,
ladite unité de commande (109) du module de protection étant apte à commander l'organe de manipulation spatiale dans le mode de reconfiguration rapide, de manière à configurer ledit module de protection dans un état de commutation apte à produire, au niveau d'un port (102) dudit module de protection, un signal optique correspondant audit signal de sortie du module à protéger.

11. Dispositif de commutation selon la revendication 10, **caractérisé par le fait que** ledit module de commutation est agencé en tant que module de protection partagé (101), le dispositif de commutation optique (100) comprenant en outre une pluralité de modules à protéger (57, 58) et une pluralité de liaisons optiques (13, 23, 33) aptes à fournir des signaux d'entrée respectivement attribués à chacun desdits modules à protéger audit module de protection partagé,
ladite unité de commande (109) du module de protection partagé étant apte à sélectionner le mode de reconfiguration rapide pour configurer ledit module de protection partagé dans des états de commutation respectivement aptes à produire, au niveau d'un port (102) dudit module de protection, des signaux optiques correspondant à des signaux de sortie des modules à protéger.

12. Dispositif de commutation selon la revendication 10 ou 11, **caractérisé par le fait que** ladite unité de commande est reliée à un module de détection de fautes (70, 71) apte à détecter une faute de fonctionnement d'un module à protéger (57, 58) et à produire un signal d'alerte (80, 81) en réponse à ladite détection.

13. Procédé de commande d'un organe de manipulation spatiale de la lumière pour un module de commutation de longueurs d'ondes optiques (101) selon l'une des revendications 1 à 9 disposé en tant que module de protection d'au moins un module de commutation de longueurs d'ondes optiques (57) disposé en tant que module à protéger, comprenant les étapes consistant à :
détecter un ordre de déclenchement de protection,
commander ledit organe de manipulation spatiale (7) en réponse audit ordre de déclenchement de protection dans un mode de reconfiguration rapide, pour placer ledit module de protection dans un état de commutation apte à produire, au niveau d'un port (102) dudit module de protection, un signal optique correspondant à un signal de sortie dudit module à protéger,
détecter un ordre de reconfiguration,
commander ledit organe de manipulation spatiale en réponse audit ordre de reconfiguration dans un mode de reconfiguration protégé contre les fautes, pour placer ledit module de protection dans un état de commutation correspondant audit ordre de reconfiguration.

## Patentansprüche

1. Modul zum Schalten von optischen Wellenlängen (50), umfassend:
Eine Vielzahl von optischen Ports (2, 3a-d),
optische Elemente (4, 5, 6, 8), welche derart angeordnet sind, dass sie eine Vielzahl von jeweiligen optischen Pfaden zwischen den besagten optischen Ports für eine Vielzahl von jeweiligen Wellenlängenkanälen bilden, wobei die besagten optischen Elemente ein Element für die räumliche Manipulation des Lichtes umfassen, welches in Zuständen konfigurierbar ist, die eine Vielzahl von Kopplungszuständen einschließen, wobei das besagte Element zur räumlichen Manipulation in einem jeden der besagten Kopplungszuständen für das Koppeln eines Abschnitts eines von einem Eingangsport (2) ausgehenden optischen Pfades mit einem Abschnitt eines zu einem Ausgangsport (3a-d) führenden optischen Pfades ausgelegt ist,
und eine Steuereinheit (9), welche für die Steuerung des Elementes für die räumliche Manipulation in einem gegen Fehler geschützten Rekonfigurationsmodus ausgelegt ist, in welchem das Element für die räumliche Manipulation gemäß einem indirekten Übergang (15), welcher einen anderen Kopplungszustand verhindert, in einen endgültigen Kopplungszustand rekonfiguriert wird,
**dadurch gekennzeichnet, dass** die Steuereinheit (9) ebenfalls dazu ausgelegt ist, das Element zur räumlichen Manipulation selektiv in einem Schnellrekonfigurationsmodus zu steuern, in welchem das Elmement zur räumlichen Manipulation gemäß einem direkten Übergang (16) zwischen dem ursprünglichen Zustand und dem endgültigen Kopplungszustand, wobei temporär ein sich von dem endgültigen Kopplungszustand unterscheidender Kopplungszustand durchlaufen wird bei, in den endgültigen Kopplungszustand rekonfiguriert wird, so dass der endgültige Kopplungszustand schneller erreicht wird als im gegen Fehler geschützten Rekonfigurationsmodus,
und dass die besagte Steuereinheit den gegen Fehler geschützten Rekonfigurationsmodus auswählt, um in Reaktion auf einen Rekonfigurationsbefehl gemäß einem ersten Typ eine Änderung des Schaltzustands in einen endgültigen Kopplungszustand zu steuern, und den Schnellrekonfigurationsmodus auswählt, um in Reaktion auf einen Rekonfigurationsbefehl gemäß einem zweiten Typ eine Änderung des Schaltzustands des Schaltmoduls in den besagten endgültigen Kopplungszustand zu steuern.

2. Schaltmodul nach Anspruch 1, **dadurch gekennzeichnet, dass** die Steuereinheit in dem gegen Fehler geschützten Rekonfigurationsmodus dazu ausgelegt ist, ein elektrisches Signal (40) zum Ansteuern des Elementes zur räumlichen Manipulation zu erzeugen, um eine vorbestimmte Stabilitätsbedingung, welche darin besteht, eine Eigenschaft des elektrischen Ansteuersignals unter einem vorbestimmten Höchstgrenzwert (41) zu halten, zu erfüllen, und dass die Steuereinheit im Schnellrekonfigurationsmodus dazu ausgelegt ist, das besagte elektrische Signal (42) zum Ansteuern des Elementes zur räumlichen Manipulation zu erzeugen, ohne die besagte Stabilitätsbedingung zu erfüllen.

3. Schaltmodul nach einem der Ansprüche 1 bis 2, **dadurch gekennzeichnet, dass** die Steuereinheit dazu ausgelegt ist, Anweisungen, welche einen logischen Indikator, der den anzuwendenden Rekonfigurationsmodus darstellt, zu verarbeiten.

4. Schaltmodul nach einem der Ansprüche 1 bis 3, **dadurch gekennzeichnet, dass** die besagten optischen Elemente ein Dispersionselement (5) umfassen, welches dazu ausgelegt ist, das Demultiplexen eines von einem Port kommenden Kanalmultiplex zu ermöglichen.

5. Schaltmodul nach Anspruch 4, **dadurch gekennzeichnet, dass** es in der Form eines Schalters mit Wellenlängenauswahl ausgelegt ist.

6. Schaltmodul nach einem der Ansprüche 1 bis 5, **dadurch gekennzeichnet, dass** das Element zur räumlichen Manipulation des Lichtes ein mobiles Ablenkungselement (8) und ein Stellglied (7), welches für das Verstellen des besagten Ablenkungselementes in Positionen, welche eine Vielzahl von Kopplungspositionen einschließen, umfasst.

7. Schaltmodul nach Anspruch 6, **dadurch gekennzeichnet, dass** das Ablenkungselement einen optischen Reflektor umfasst.

8. Schaltmodul nach Anspruch 6 oder 7, **dadurch gekennzeichnet, dass** das Stellglied ein mikroelektromechanisches System umfasst.

9. Schaltmodul nach einem der Ansprüche 1 bis 5, **dadurch gekennzeichnet, dass** das Element zur räumlichen Manipulation des Lichtes einen räumlichen Modulator mit Flüssigkristallen umfasst.

10. Optische Schaltvorrichtung (100), **dadurch gekennzeichnet, dass** sie ein Schaltmodul gemäß einem der Ansprüche 1 bis 9 umfasst, welches als Schutzmodul (101) angeordnet ist, wobei die optische Schaltvorrichtung umfasst:
Ein Wellenlängenschaltmodul (57), welches als zu schützendes Modul angeordnet ist,
wobei das besagte zu schützende Modul dazu ausgelegt ist, mindestens ein Eingangssignal zu empfangen und mindestens ein Ausgangssignal, welches ein oder mehrere unter den Komponenten des besagten mindestens einen Eingangssignals ausgewählte Wellenlängenkanäle einschließt, zu übertragen,
eine optische Verbindung (13, 33), welche für das Bereitstellen des besagten Eingangssignals an das besagte Schutzmodul ausgelegt ist,
wobei die besagte Steuereinheit (109) des Schutzmoduls dazu ausgelegt ist, das Element zur räumlichen Manipulation im Schnellrekonfigurationsmodus zu steuern, um das besagte Schutzmodul in einem Schaltmodus zu konfigurieren, welcher fähig ist, an einem Port (102) des besagten Schutzmoduls ein optisches Signal zu erzeugen, welches dem besagten Ausgangsmodul des zu schützenden Moduls entspricht.

11. Schaltvorrichtung nach Anspruch 10, **dadurch gekennzeichnet, dass** das besagte Schaltmodul als gemeinsames Schutzmodul (101) ausgelegt ist, wobei die optische Schaltvorrichtung (100) weiterhin eine Vielzahl von zu schützenden Modulen (57, 58) und eine Vielzahl von optischen Verbindungen (13, 23, 33), welche dazu ausgelegt sind, jeweils einem jeden der besagten zu schützenden Module zugewiesene Eingangssignale an das besagte gemeinsame Schutzmodul bereitzustellen, umfasst,
wobei die besagte Steuereinheit (109) des gemeinsamen Schutzmoduls dazu ausgelegt ist, den Schnellrekonfigurationsmodus auszuwählen, um das besagte gemeinsame Schutzmodul in Schaltzuständen zu konfigurieren, welche jeweils fähig sind, an einem Port (102) des besagten Schutzmoduls optische Signale zu erzeugen, die den Ausgangssignalen der zu schützenden Module entsprechen.

12. Schaltvorrichtung nach Anspruch 10 oder 11, **dadurch gekennzeichnet, dass** die besagte Steuereinheit an ein Fehlererkennungsmodul (70, 71) angeschlossen ist, welches dazu ausgelegt ist, einen Betriebsfehler eines zu schützenden Moduls (57, 58) zu erkennen und in Reaktion auf das besagte Erkennen ein Warnsignal (80, 81) zu erzeugen.

13. Verfahren zur Steuerung eines Elementes zur räumlichen Manipulation des Lichtes für ein Modul zum Schalten von optischen Wellenlängen (101) gemäß einem der Ansprüche 1 bis 9, welches als Schutzmodul mindestens eines als zu schützendes Modul angeordneten Moduls zum Schalten von optischen Wellenlängen (57) angeordnet ist, wobei das Verfahren die folgenden Schritte umfasst:
Erkennen eines Schutzauslösungsbefehls,
in Reaktion auf den besagten Schutzauslösungsbefehl in einem Schnellrekonfigurationsmodus, Ansteuern des besagten Elementes zur räumlichen Manipulation (7), um das besagte Schutzmodul in einen Schaltzustand zu versetzen,
welcher es ermöglicht, am Port (102) des besagten Schutzmoduls ein optisches Signal zu erzeugen, welches einem Ausgangssignal des besagten zu schützenden Moduls entspricht,
Erkennen eines Rekonfigurationsbefehls,
in Reaktion auf den besagten Rekonfigurationsbefehl in einem gegen Fehler geschützten Schnellrekonfigurationsmodus, Ansteuern des besagten Elementes zur räumlichen Manipulation, um das besagte Schutzmodul in einen Schaltzustand zu versetzen, welcher dem besagten Rekonfigurationsbefehl entspricht.

## Claims

1. An optical wavelength switching module (50) comprising
a plurality of optical ports (2, 3a-d),
optical elements (4, 5, 6, 8) disposed in such a way as to form a plurality of respective optical paths between said optical ports for a plurality of respective wavelength channels, said optical elements including an organ for the spatial manipulation of light, which can be configured into states including a plurality of coupling states, in each of which said spatial manipulation organ is able to couple a section of optical path coming from an input port (2) with a section of optical path going to an output port (3a-d),
and a control unit (9) able to set the spatial manipulation organ into a fault-protected reconfiguration mode, wherein the spatial manipulation organ is reconfigured into a final coupling state using an indirect transition (15) that avoids any other coupling state, **characterized by** the fact that the control unit (9) is also able to set the spatial manipulation organ selectively into a fast reconfiguration mode, wherein the spatial manipulation organ is reconfigured to the final coupling state using a direct transition (16) between the initial state and the final coupling state, passing temporarily through another coupling state different from the final coupling state, so as to more quickly reach the final coupling state than in the fault-protected reconfigured mode,
and that said control unit selects the fault-protected reconfiguration mode to order a modification of the switching state of the switching module to a final coupling state in response to a reconfiguration order of a first type and selects the fast reconfiguration mode to order a modification of the switching state of the switching module to said final coupling state in response to a reconfiguration order of a second type.

2. A switching module according to claim 1, **characterized by** the fact that, in the fault-protected reconfiguration mode, the control unit is able to produce an electrical control signal (40) of the spatial manipulation organ so as to meet a predetermined stability condition consisting of maintaining a characteristic of the electrical control signal beneath a predetermined maximum threshold (41) and, in the fast reconfiguration mode, the control unit is able to produce said electrical control signal (42) of the spatial manipulation organ without meeting said stability condition.

3. A switching module according to one of the claims 1 to 2, **characterized by** the fact that the control unit is able to process instructions comprising a logical indicator representing the reconfiguration mode to be used.

4. A switching module according to one of the claims 1 to 3, **characterized by** the fact that said optical elements comprise a dispersive element (5) arranged so as to be able to demultiplex a multiplex of channels coming from a port.

5. A switching module according to claim 4, **characterized by** the fact that it is arranged in the form of a wavelength selective switch.

6. A switching module according to one of the claims 1 to 5, **characterized by** the fact that the organ for the spatial manipulation of light comprises a mobile deflection organ (8) and an actuator (7) able to move said deflection organ into positions including a plurality of coupling positions.

7. A switching module according to claim 6, **characterized by** the fact that the deflection organ comprises an optical reflector.

8. A switching module according to claim 6 or 7, **characterized by** the fact that the actuator comprises a microelectromechanical system.

9. A switching module according to one of the claims 1 to 5, **characterized by** the fact that the organ for the spatial manipulation of light comprises a liquid crystal spatial modulator.

10. An optical switching device (100), **characterized by** the fact that it comprises a switching module according to one of the claims 1 to 9 disposed as a protection module (101), the optical switching device comprising
a wavelength switching module (57) disposed as a module to be protected, said module to be protected being able to receive at least one input signal and to transmit at least one output signal including one or more wavelength channels selected from the components of said at least one input signal,
an optical link (13, 33) able to provide said input signal to said protection module,
said control unit (109) of the protection module being able to set the spatial manipulation organ to the fast reconfiguration mode, so as to configure said protection module into a switching state able to produce, within a port (102) of said protection module, an optical signal corresponding to said output signal of the module to be protected.

11. A switching device according to claim 10, **characterized by** the fact that said switching module is arranged as a shared protection module (101), the optical switching device (100) further comprising a plurality of modules to be protected (57, 68) and a plurality of optical links (13, 23, 33) able to provide input signals respectively assigned to each of said modules to be protected to said shared protection module,
said control unit (109) of the shared protection module being able to select the fast reconfiguration mode to configure said shared protection module in switching states respectively able to produce, within a port (102) of said protection module, optical signals corresponding to output signals of the modules to be protected.

12. A switching device according to claim 10 or 11, **characterized by** the fact that said control unit is connected to a fault detection module (70, 71) able to detect an operating fault of a module to be protected (57, 58) and to produce an alert signal (80, 81) in response to said detection.

13. A method for controlling an organ for the spatial manipulation of light for an optical wavelength switching module (101) according to one of the claims 1 to 9 disposed as a module to protect at least one optical wavelength switching module (57) disposed as a module to be protected, comprising the steps consisting of:
detecting a protection-triggering order,
setting said spatial manipulation organ (7), in response to said protection-triggering order, to a fast reconfiguration mode, in order to place said protection module into a switching state able to produce, within a port (102) of said protection module, an optical signal corresponding to an output signal of said module to be protected,
detecting a reconfiguration order,
setting said spatial manipulation organ, in response to said reconfiguration order, to a fault-protected reconfiguration mode, in order to place said protection module into a switching state corresponding to said reconfiguration order.
